# EUROPEAN PATENT APPLICATION

(11) **EP 4 385 607 A1**
(43) Date of publication of application: **19.06.2024**
(21) Application number: 23207621.6
(22) Date of filing: 03.11.2023
(51) Int. Cl.: B01D 46/00, B01D 46/24, B01D 46/64, F04B 39/04

(54) **LIQUID SEPARATION CONSTITUENT, LIQUID SEPARATION FILTER, AND COMPRESSOR SYSTEM**

(30) Priority: 14.12.2022 JP 2022199404
(71) Applicant: Kabushiki Kaisha Kobe Seiko Sho (Kobe Steel, Ltd.), Kobe-shi, Hyogo 651-8585 (JP)
(72) Inventor: NAKAMOTO, Yuya, Takasago-shi, 676-8670 (JP)
(74) Representative: TBK

(57) **Abstract**

A liquid separation constituent is used by covering a first element portion having a fiber layer for separating liquid from gas discharged from a compressor, and includes a second element portion, a holding portion, and a non-element portion. The second element portion is a tubular portion having a fiber layer that is disposed on the outer side in the radial direction so as to surround the first element portion when the second element portion covers the first element portion and further separates liquid from gas separated by the first element portion. The holding portion is a portion that holds the second element portion such that a gap is formed between the first element portion and the second element portion in the radial direction. The non-element portion is a portion configured to suppress liquid seeping out from a lower portion of the first element portion from scattering to the second element portion.

## Description

### FIELD OF INVENTION

The present invention relates to a liquid separation constituent, a liquid separation filter, and a compressor system.

### BACKGROUND ART

Conventionally, a compressor is employed to compress various types of gas such as natural gas and hydrogen gas. For example, in recent years, in consideration of the environment, use of hydrogen for power generation and as fuel for an automobile, and the like is considered, and demand for hydrogen is increasing. The compressor includes a liquid separation filter for separating liquid from discharged gas. JP 2017-133391 A discloses a compressor system in which a discharge flow path connected to a discharge side of a compressor is branched into first and second pipes, and an oil separation filter is provided in each pipe.

For a compressor system, reduction in manufacturing cost and size of the system are required. As a measure to meet such a demand, a liquid separation filter in which a plurality of element portions are arranged in multiple layers is employed. For example, JP 6216961 B2 discloses a separation filter having a configuration in which first to fourth element portions each having a cylindrical shape are included, and the fourth element portion, the third element portion, the second element portion, and the first element portion cover one another in order from the inner side to the outer side in a radial direction. In the separation filter having this configuration, gas is introduced from the side of the first element disposed on the outer side in the radial direction, water and oil are separated as gas passes through the first to fourth element portions, and gas after the separation is sent from a space inside the fourth element portion to the outside of the separation filter.

### SUMMARY OF THE INVENTION

JP 2009-226322 A points out the problem that "in a high-performance mist filter using fine glass fiber or the like, a cartridge structure is formed by a plate of an adhesive layer holding leakage prevention and form at upper and lower ends. In this case, condensed and dropletized mist accumulates in a lower portion and a large amount of the mist is forced out to the outside (downstream side) by flow of air and differential pressure of the cartridge. However, there also exists a large amount of mist condensed liquid retained in a filter layer. This mist condensed liquid becomes a bubble by flow of air to induce re-scattering, resulting in deterioration of separation performance".

Also in the separation filter disclosed in JP 6216961 B2, there may be a case where oil or water (hereinafter, referred to as "oil and the like") seeping out from a lower portion on an inner peripheral surface of the first element portion is re-scattered to the second element portion. That is, oil or the like separated in the first element portion accumulates in a lower portion of the first element portion under the influence of gravity, but when a certain amount or more of oil or the like is accumulated, the oil or the like seeps out to a surface (inner peripheral surface) on the downstream side in a gas flow direction. The oil or the like that seeps out is re-scattered by flow of gas and adheres to the second element portion adjacent to the inner side in a radial direction. In a case where the re-scattered oil or the like adheres in this manner, there arises a problem that deterioration of the second element portion is accelerated and the life is shortened.

The present invention has been made to solve the problem as described above, and an object of the present invention is to provide a liquid separation constituent, a liquid separation filter, and a compressor system including the liquid separation filter, by which increase in life can be achieved while increase in manufacturing cost and increase in size is suppressed and decrease in performance is suppressed.

A liquid separation constituent according to an aspect of the present invention is a liquid separation constituent used by covering a first element portion having a fiber layer for separating liquid from gas discharged from a compressor, and includes a second element portion, a holding portion, and a non-element portion. The second element portion is a tubular portion having a fiber layer that is disposed on the outer side in the radial direction so as to surround the first element portion when the second element portion covers the first element portion and further separates liquid from gas separated by the first element portion. The holding portion is a portion that holds the second element portion such that a gap is formed between the first element portion and the second element portion in the radial direction. The non-element portion is a portion configured to suppress liquid seeping out from a lower portion of the first element portion from scattering to the second element portion.

A liquid separation filter according to an aspect of the present invention is a liquid separation filter that separates liquid from gas discharged from a compressor, and includes a housing container and a liquid separation core. The housing container has a gas inlet and a gas outlet. The liquid separation filter core is housed in the housing container. In the liquid separation filter according to the present aspect, the liquid separation filter core includes a first element portion, a second element portion, a gap forming portion, and a non-element portion. The first element portion is a portion having a tubular shape and having a fiber layer that first separates liquid from gas flowing in from the gas inlet. The second element portion is a portion that has a tubular shape, is disposed on the outer side in the radial direction so as to surround the first element portion, and includes a fiber layer that further separates liquid from gas separated in the first element portion. The gap forming portion is a portion that forms a gap between the first element portion and the second element portion by separating the first element portion and the second element portion in the radial direction. The non-element portion is a portion configured to suppress liquid seeping out from a lower portion of the first element portion from scattering to the second element portion.

The compressor system according to an aspect of the present invention includes a compressor, a liquid recovery device, and a liquid separation filter. The liquid recovery device collects liquid from discharge gas discharged from the compressor. The liquid separation filter is a liquid separation filter that is provided on the downstream side of the liquid recovery device and separates liquid from discharge gas, and the liquid separation filter according to the above aspect is applied.

### BRIEF DESCRIPTION OF THE DRAWINGS

Fig. 1 is a diagram illustrating a configuration of a compressor system according to a first embodiment of the present invention;
Fig. 2 is a cross-sectional view illustrating a configuration of a liquid separation filter core according to the first embodiment of the present invention;
Fig. 3 is a cross-sectional view illustrating a configuration of the liquid separation filter core taken along line III-III of Fig. 2;
Fig. 4 is a cross-sectional view illustrating a configuration of a liquid separation constituent according to the first embodiment of the present invention;
Fig. 5 is a cross-sectional view illustrating a state before the liquid separation filter core according to the first embodiment of the present invention is covered with the liquid separation constituent;
Fig. 6 is a diagram for describing a mechanism for suppress adhesion of re-scattered liquid to a second element portion in the liquid separation filter according to the first embodiment of the present invention;
Fig. 7 is a cross-sectional view illustrating a configuration of the liquid separation filter core according to a second embodiment of the present invention;
Fig. 8 is a cross-sectional view illustrating a configuration of the liquid separation filter core taken along line VIII-VIII in Fig. 7;
Fig. 9 is a cross-sectional view illustrating a partial configuration of the liquid separation filter core according to a third embodiment of the present invention;
Fig. 10 is a cross-sectional view illustrating a partial configuration of the liquid separation filter core according to a fourth embodiment of the present invention;
Fig. 11 is a cross-sectional view illustrating a partial configuration of the liquid separation filter core according to a fifth embodiment of the present invention;
Fig. 12 is a cross-sectional view illustrating a partial configuration of the liquid separation filter core according to a sixth embodiment of the present invention; and
Fig. 13 is a cross-sectional view illustrating a partial configuration of the liquid separation filter core according to a seventh embodiment of the present invention.

### DETAILED DESCRIPTION

Hereinafter, an embodiment for carrying out the present invention will be described with reference to the drawings. Note that the embodiment described below is an embodiment illustratively showing the present invention. Therefore, the present invention is not limited to the embodiment below except for an essential configuration of the present invention.

### [First embodiment]

A liquid separation constituent 36, a liquid separation filter 20, and a compressor system 10 according to a first embodiment of the present invention will be described with reference to the drawings.

### 1. Compressor system 10

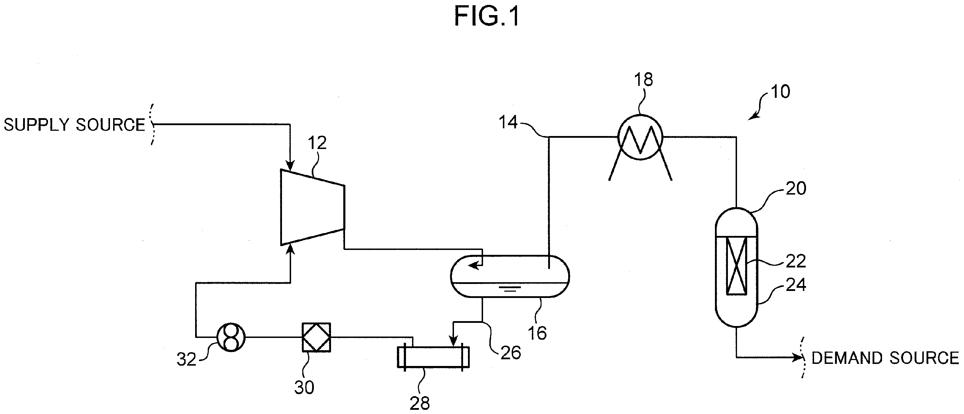

The compressor system 10 according to the present embodiment will be described with reference to Fig. 1.

As illustrated in Fig. 1, the compressor system 10 includes a compressor 12, a liquid recovery device 16, a gas cooler 18, and a liquid separation filter 20. The compressor 12, the liquid recovery device 16, the gas cooler 18, and the liquid separation filter 20 are connected to each other by a main pipe 14. The compressor 12 is a screw compressor. The liquid recovery device 16 is connected to a discharge side of the compressor 12. As the compressor 12, a screw compressor of an oil feed type or an oilless type is employed. In a case of a screw compressor of an oil feed type, discharged gas contains oil as liquid (liquid other than oil may also be contained). In a screw compressor of an oilless type, in a case where water is poured into the inside, discharged gas contains water as liquid (liquid other than water can also be contained). Note that, as the compressor 12, a reciprocating compressor or a scroll compressor may be employed in addition to a screw compressor. The compressor 12 can handle various types of gas such as hydrogen gas, natural gas, and refrigerant gas for a refrigerator.

The liquid recovery device 16 collects liquid contained in gas discharged from the compressor 12. However, there is a case where the liquid recovery device 16 cannot separate and recover all liquid contained in gas. For this reason, a part of liquid is sent to the gas cooler 18 side together with gas.

A recovery path 26 is connected to the liquid recovery device 16. The recovery path 26 has one end connected to the liquid recovery device 16 and the other end connected to a suction portion or the like of the compressor 12. The recovery path 26 is provided with a liquid cooler 28, a filter 30, and a pump 32. The liquid cooler 28 cools collected liquid. The filter 30 removes a foreign substance contained in liquid. The pump 32 is a pump that sucks liquid further on the upstream side than the pump 32 in the recovery path 26 and returns the liquid to the compressor 12 on the downstream side. Note that, in the compressor system 10, the liquid recovery device 16, the recovery path 26, the liquid cooler 28, the filter 30, and the pump 32 may be omitted.

The gas cooler 18 is provided in a portion on the downstream side of the liquid recovery device 16 of the main pipe 14. In the gas cooler 18, gas heated by compression in the compressor 12 is cooled. In the compressor system 10, the gas cooler 18 may be omitted.

The liquid separation filter 20 is provided in a portion on the downstream side of the gas cooler 18 in the main pipe 14. Gas cooled by the gas cooler 18 flows into the liquid separation filter 20.

### 2. Liquid separation filter 20

A configuration of the liquid separation filter 20 will be described with reference to Fig. 1.

The liquid separation filter 20 includes a housing container 24 and a liquid separation filter core 22. The housing container 24 has a gas inlet for receiving gas flowing from the upstream side of the main pipe 14 and a gas outlet which is an outlet for allowing gas to flow out to the downstream side of the main pipe 14. Note that, in Fig. 1, detailed illustration of the gas inlet and the gas outlet in the housing container 24 is omitted.

The liquid separation filter core 22 is housed in the housing container 24. In the housing container 24, the liquid separation filter core 22 separates liquid from gas that flows in. Then, gas from which liquid is separated flows to the downstream side of the main pipe 14 from the liquid separation filter 20.

### 3. Liquid separation filter core 22

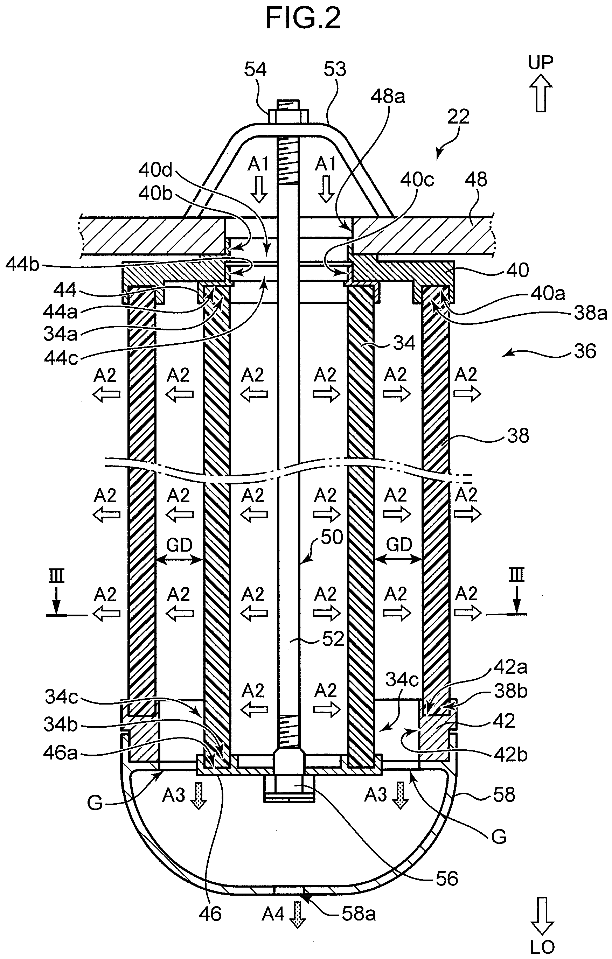

A configuration of the liquid separation filter core 22 will be described with reference to Figs. 2 to 5. Note that, in Figs. 2, 4, and 5, "UP" indicates an upward direction, and "LO" indicates a downward direction.

As illustrated in Fig. 2, the liquid separation filter core 22 includes a first element portion 34 and the liquid separation constituent 36. Furthermore, the liquid separation filter core 22 includes a first upper end holding portion 44, a first lower end holding portion 46, and a fixture 50. The liquid separation filter core 22 is attached to the housing container 24 via a top plate 48.

The first element portion 34 has a fiber layer (for example, a layer made from glass wool or a demister) and is formed in a cylindrical shape. Note that a cylindrical porous metal plate (punching metal, wire mesh, or the like) may be attached to an outer surface or an inner surface of the fiber layer. The same applies to a fiber layer of a second element portion 38 and a third element portion 60 described later.

The first upper end holding portion 44 is made from an annular plate material. The first upper end holding portion 44 has a receiving recessed portion 44a opened downward on a lower surface. The receiving recessed portion 44a has an annular shape in plan view from above or below. Further, the first upper end holding portion 44 has an insertion portion 44b protruding upward above the receiving recessed portion 44a and around an opening portion 44c at a central portion. The insertion portion 44b has a cylindrical shape.

The first lower end holding portion 46 is formed of a substantially disk-shaped member. The first lower end holding portion 46 has an annular receiving recessed portion 46a opened upward on an upper surface. In the first element portion 34, an upper end portion 34a is fitted into the receiving recessed portion 44a of the first upper end holding portion 44, and the lower end portion 34b is fitted into the receiving recessed portion 46a of the first lower end holding portion 46.

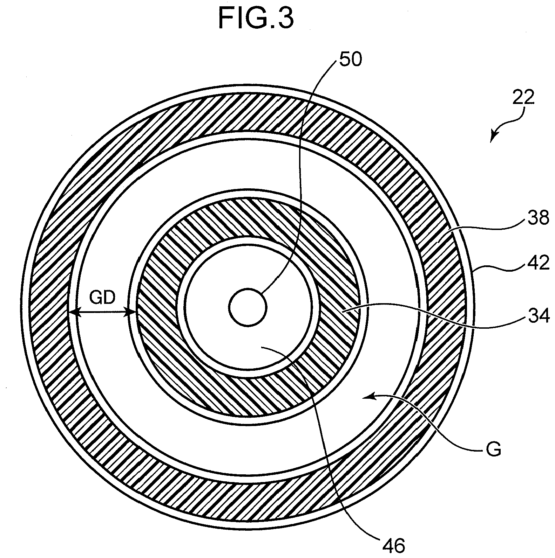

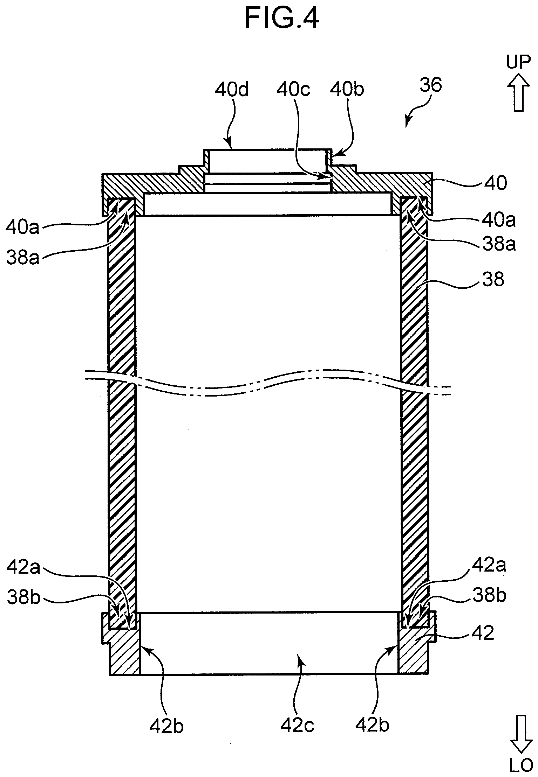

As illustrated in Figs. 2 and 4, the liquid separation constituent 36 is a constituent used by covering the first element portion 34. The liquid separation constituent 36 includes the second element portion 38, a holding portion 40, a second lower end holding portion 42, and a liquid storage portion 58. The second element portion 38 has a fiber layer (for example, a layer made from a glass fiber or activated carbon) and is formed in a cylindrical shape. As illustrated in Figs. 2 and 3, the second element portion 38 is formed to have a slightly larger diameter so as to be arranged with a gap GD on the outer side in the radial direction with respect to the first element portion 34.

The holding portion 40 is an annular member and has a receiving recessed portion 40a opened downward on a lower surface. The upper end portion 38a of the second element portion 38 is fitted into the receiving recessed portion 40a of the holding portion 40. The holding portion 40 has a positioning portion 40b protruding upward around the opening portion 40d at a central portion. The positioning portion 40b has a cylindrical shape. The positioning portion 40b is inserted into an opening portion 48a provided in the top plate 48. By the above, the second element portion 38 is positioned. The holding portion 40 further includes an insertion receiving portion 40c below the positioning portion 40b. The insertion receiving portion 40c has an inner peripheral surface having a diameter larger than an inner diameter of an inner peripheral surface of the positioning portion 40b. As illustrated in Fig. 2, the insertion receiving portion 40c receives insertion of the insertion portion 44b of the first upper end holding portion 44.

Note that, in the liquid separation filter core 22, the insertion portion 44b of the first upper end holding portion 44 is inserted (fitted) into the insertion receiving portion 40c of the holding portion 40. By the above, the gap GD is formed in the radial direction between the first element portion 34 in which the upper end portion 34a is fitted into the receiving recessed portion 44a of the first upper end holding portion 44 and the second element portion 38 in which the upper end portion 38a is fitted into the receiving recessed portion 40a of the holding portion 40. That is, in the liquid separation filter 20 including the liquid separation filter core 22, the holding portion 40 functions as a gap forming portion that separates the first element portion 34 and the second element portion 38 in the radial direction to form the gap GD between the first element portion 34 and the second element portion 38.

The second lower end holding portion 42 is a member in which a double annular protruding portion is provided on a disk. The second lower end holding portion 42 has a receiving recessed portion 42a opened upward on an upper surface. The receiving recessed portion 42a has an annular shape in plan view from above or below. A lower end portion 38b of the second element portion 38 is fitted into the receiving recessed portion 42a of the second lower end holding portion 42.

Here, as illustrated in Fig. 2, the second element portion 38 is formed such that a lower end surface is located further on the upper side than the first element portion 34. For this reason, the receiving recessed portion 42a of the second lower end holding portion 42 is disposed so as to be located further on the upper side than the receiving recessed portion 46a of the first lower end holding portion 46. That is, the second lower end holding portion 42 has an inner peripheral wall surface portion (non-element portion) 42b facing a lower portion (outer surface lower portion) 34c on an outer surface in the radial direction of the first element portion 34 on the outer side in the radial direction. A function of the non-element portion 42b will be described later.

The fixture 50 includes a bar member 52 having a male screw formed at both ends, nuts 54 and 56, and a pressing portion 53. The bar member 52 is disposed such that an upper end is inserted into a through hole of a plate portion 48b disposed in an upper portion of the top plate 48 and a lower end is inserted into a through hole provided in a central portion of the first lower end holding portion 46. The nut 54 is screwed with a male screw in an upper portion of the bar member 52 above the pressing portion 53. The nut 56 is screwed with a male screw in a lower portion of the bar member 52 below the first lower end holding portion 46. As described above, the nuts 54 and 56 are screwed to upper and lower male screws of the bar member 52, so that the pressing portion 53 presses the top plate 48 from above, and the first upper end holding portion 44, the first element portion 34, and the first lower end holding portion 46 are fixed to the top plate 48. Further, the holding portion 40 is sandwiched between a lower surface of the top plate 48 and a part of an upper surface of the first upper end holding portion 44. For this reason, the liquid separation constituent 36 is fixed to the top plate 48 and the first element portion 34 in a state of covering the outer side in the radial direction of the first element portion 34.

Note that, as illustrated in Figs. 2 and 3, in the liquid separation filter core 22, an opening portion G having an annular shape is provided between the first lower end holding portion 46 and the second lower end holding portion 42. That is, the second lower end holding portion 42 is separated to the outer side in the radial direction from the first lower end holding portion 46.

The liquid storage portion 58 is one constituent of the liquid separation constituent 36, and is a bowl-shaped member whose upper portion is opened. The liquid storage portion 58 is fixed to the second lower end holding portion 42 at an upper portion of an outer peripheral edge. The liquid storage portion 58 includes a discharge mechanism 58a that discharges liquid that flows in to the outside.

### 4. Liquid separation at liquid separation filter 20

As illustrated in Fig. 2, gas introduced into the housing container 24 through the gas inlet of the housing container 24 passes through the opening portion 48a of the top plate 48, the opening portion 40d of the holding portion 40, and the opening portion 44c of the first upper end holding portion 44, and is introduced into a space on the inner side in the radial direction of the first element portion 34 (arrow A1).

Gas introduced into a space on the inner side in the radial direction of the first element portion 34 flows to the outer side in the radial direction and sequentially passes through the first element portion 34 and the second element portion 38 (arrow A2). Then, gas that passes through the second element portion 38 and flows to the outer side in the radial direction of the second element portion 38 is led out from the gas outlet of the housing container 24 continuous to the portion.

Liquid filtered when passing through the first element portion 34 as indicated by the arrow A2 flows down through the opening portion G (arrow A3) and is stored in the liquid storage portion 58. Then, liquid stored in the liquid storage portion 58 is discharged from the discharge mechanism 58a (arrow A4). Note that the discharge mechanism 58a may be a mechanism that discharges liquid accumulated at predetermined time intervals to the outside. Further, the discharge mechanism 58a may be a mechanism that grasps an amount of accumulated liquid based on a weight measurement result and a detection result of a float switch and discharges liquid to the outside in a case where these results exceed a threshold. Note that the liquid storage portion 58 is more preferably designed to have a capacity larger than a drain accumulated amount predicted during a use period.

### 5. Mounting of liquid separation constituent 36 to first element portion 34

In the present embodiment, the liquid separation filter core 22 of the liquid separation filter 20 is configured as the first element portion 34 is covered with the liquid separation constituent 36. Hereinafter, a method of mounting (putting) the liquid separation constituent 36 on the first element 34 will be described with reference to Figs. 2, 4, and 5.

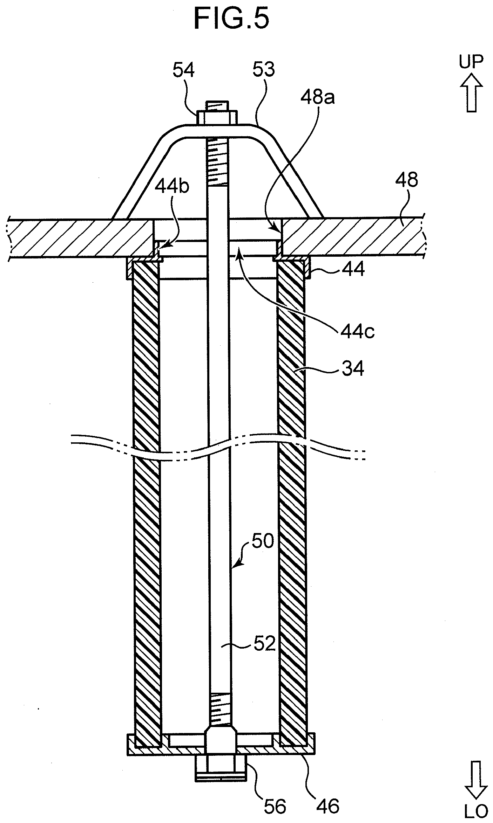

First, as illustrated in Fig. 5, in a state before the first element portion 34 is covered with the liquid separation constituent 36, the insertion portion 44b of the first upper end holding portion 44 is fitted into the opening portion 44c of the top plate 48. Then, the first element portion 34 is fixed to the top plate 48 together with the first upper end holding portion 44 and the first lower end holding portion 46 by the fixture 50. Note that the first element portion 34 is attachable to and detachable from the top plate 48 by fastening/unfastening the fixture 50.

Next, in order to constitute the liquid separation filter core 22 in which the first element portion 34 is covered with the liquid separation constituent 36, fastening by the fixture 50 is released from a state illustrated in Fig. 5. By the above, a pressing state of the pressing portion 53 with respect to the top plate 48 is released, and the insertion portion 44b of the first upper end holding portion 44 can be pulled out downward from the opening portion 48a of the top plate 48. By pulling out the insertion portion 44b from the opening portion 48a in this manner, the first element portion 34 is removed from the top plate 48.

Next, the liquid separation constituent 36 illustrated in Fig. 4 is attached to the top plate 48 from which the first element portion 34 is removed together with the first upper end holding portion 44 and the first lower end holding portion 46. Specifically, the positioning portion 40b of the holding portion 40 of the liquid separation constituent 36 is fitted into the opening portion 48a of the top plate 48. By the above, the second element portion 38 is positioned. Note that the liquid storage portion 58 in the configuration of the liquid separation constituent 36 is in a state of being removed in this state. Then, in a state where the liquid separation constituent 36 (excluding the liquid storage portion 58) is attached to the top plate 48, the first element portion 34 held by the first upper end holding portion 44 and the first lower end holding portion 46 is inserted from an opening portion 42c in a lower portion of the second lower end holding portion 42.

As illustrated in Fig. 2, the insertion portion 44b of the first upper end holding portion 44 is inserted (fitted) into the insertion receiving portion 40c of the holding portion 40. At this time, the gap GD is formed between the first element portion 34 and the second element portion 38. After the above, the bar member 52 of the fixture 50 is inserted as illustrated in Fig. 2, the nuts 54 and 56 are screwed, and the liquid storage portion 58 is attached, so that the liquid separation constituent 36 covers the first element portion 34 to form the liquid separation filter core 22.

Note that the first element portion 34 in a state of being held by the first upper end holding portion 44 and the first lower end holding portion 46 may be first covered with the liquid separation constituent 36 and, in this state, attached to the top plate 48.

Further, only the holding portion 40 may be attached to the top plate 48 first, and in this state, the first element portion 34 in a state of being held by the first upper end holding portion 44 and the first lower end holding portion 46 may be attached, and finally, the second element portion 38, the second lower end holding portion 42, and the liquid storage portion 58 may be attached.

### 6. Function of non-element portion 42b

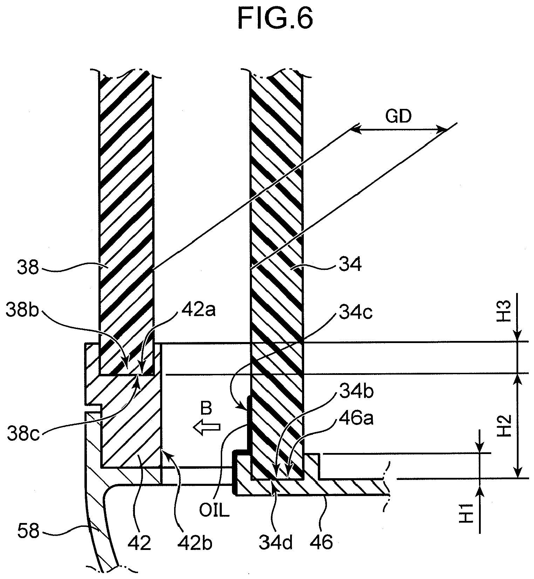

As described above, the inner peripheral wall surface portion (non-element portion) 42b of the second lower end holding portion 42 is disposed on the outer side in the radial direction with respect to the outer surface lower portion 34c of the first element portion 34. A function of the non-element portion 42b will be described with reference to Fig. 6.

As illustrated in Fig. 6, a lower end surface 38c of the second element portion 38 is located further on the upper side than a lower end surface 34d of the first element portion 34. Then, the lower end portion 38b of the second element portion 38 is fitted into the receiving recessed portion 42a of the second lower end holding portion 42. By the above, the non-element portion 42b of the second lower end holding portion 42 faces the outer side in the radial direction with respect to the outer surface lower portion 34c of the first element portion 34.

Here, in the liquid separation filter core 22, liquid collected by the first element portion 34 is accumulated in a lower portion of the first element portion 34. Then, a part of liquid accumulated in a lower portion of the first element portion 34 seeps out to the outer surface lower portion 34c (seeping liquid). As described with reference to Fig. 2, gas in the liquid separation filter core 22 flows from the inner side to the outer side in the radial direction. For this reason, a part of seeping liquid may be re-scattered to the outer side in the radial direction as indicated by an arrow B along flow of gas.

However, in the present embodiment, since the non-element portion 42b is disposed in a portion facing the outer side in the radial direction with respect to the outer surface lower portion 34c in the first element portion 34, even if a part of seeping liquid is re-scattered to the outer side in the radial direction as indicated by the arrow B, the seeping liquid is suppressed from adhering to the second element portion 38.

Here, as illustrated in Fig. 6, a height from the lower end surface 34d of the first element portion 34 to an upper end of the non-element portion 42b can be expressed by (H2 + H3). Note that a height H2 is set to be a dimension that is at least larger than a height H1 of an inner and outer edge walls of a receiving recessed portion in the first lower end holding portion 46.

Further, in the present embodiment, the gap GD in the radial direction between the first element portion 34 and the second element portion 38 is set in a range of 5 mm or more and 100 mm or less as an example. For this reason, (H2 + H3) can be made large in a case where the gap GD is relatively small, and (H2 + H3) can be made small in a case where the gap GD is relatively large. That is, in a case where the gap GD is small, there is a high possibility that liquid re-scattered from the first element portion 34 adheres to the second element portion 38, and thus it is necessary to make (H2 + H3) large.

On the other hand, in a case where the gap GD is large, there is a low possibility that liquid re-scattered from the first element portion 34 adheres to the second element portion 38, and thus it is necessary to make (H2 + H3) small. That is, when the gap GD is large, even if liquid re-scatters to the outer side in the radial direction from the first element portion 34, proportion of the liquid falling downward under influence of gravity becomes large, so that (H2 + H3) can be made small.

### 7. Advantageous effect

The liquid separation constituent 36 according to the present embodiment is configured to cover the first element portion 34. For this reason, by covering an existing liquid separation filter including only the first element portion 34 with the liquid separation constituent 36 according to the present embodiment, it is possible to easily form the liquid separation filter 20 in which a plurality of the element portions 34 and 38 are provided in multiple layers. Therefore, in the compressor system 10 according to the present embodiment, increase in cost can be reduced as compared with a case where an existing liquid separation filter is removed and the liquid separation filter 22 is newly provided. Further, in the compressor system 10 according to the present embodiment, since a plurality of the element portions 34 and 38 are provided in multiple layers in one of the housing container 24, it is possible to reduce size of an entire system while suppress reduction in a liquid collecting effect as compared with a case where a plurality of liquid separation filters are arranged in multiple stages.

Further, in the liquid separation constituent 36 according to the present embodiment, the non-element portion 42b is provided in a portion facing the outer side in the radial direction of the outer surface lower portion 34c of the first element portion 34, that is, on the side opposite to the first element portion 34 via the gap GD. This makes it possible to suppress adhesion of liquid to the second element portion 38 even if the liquid is re-scattered from the outer surface lower portion 34c of the first element portion 34. That is, as described with reference to Fig. 6, liquid collected by the first element portion 34 is accumulated in a lower portion of the first element portion. The lower portion (hereinafter, a "WET band portion") of the first element portion 34 holds a large amount of liquid, and liquid easily seeps out to an outer surface. In the present embodiment, since the non-element portion 42b is provided in a portion facing the outer surface lower portion 34c of the first element portion 34, even if seeping liquid re-scatters, the non-element portion 42b suppress the seeping liquid from adhering to the second element portion 38. Further, since the second lower end holding portion 42 is made from a metal material or the like, gas cannot pass through the non-element portion 42b. For this reason, an amount of gas to the outer side in the radial direction from the outer surface lower portion 34c of the first element portion 34 can be reduced to be small. By the above, in the liquid separation filter 20 according to the present embodiment, re-scattering of liquid itself can be deactivated.

Note that a structure in which an appropriate pore-free plate is caused to abut on a fiber layer portion of the outer surface lower portion 34c of the first element portion 34 to suppress re-scattering of liquid from the fiber layer portion is conceivable. However, in the structure, if the fiber layer portion excessively holds liquid up to the same height as an upper end portion of the plate, re-scattering may occur. Alternatively, in the structure, since there is no gap between the plate and the outer surface lower portion 34c, liquid is likely to seep out to an outer surface of the plate, and thus there is a possibility that liquid is re-scattered to the second element portion 38.

Further, in the liquid separation filter 20 according to the present embodiment, as described above, liquid seeping out to the outer surface lower portion 34c of the first element portion 34 can be suppressed from adhering to the second element portion 38, so that deterioration of the second element portion 38 can be reduced. By the above, in the liquid separation filter 20, an amount of adhesion of liquid in the second element portion 38 can be reduced to be small, and pressure loss can be made unlikely to increase. By the above, the liquid separation filter 20 achieves both maintenance of high performance and long life.

Note that, in the liquid separation filter 20 according to the present embodiment, since a plurality of the element portions 34 and 38 separated from each other in the radial direction are responsible for collecting liquid, a processing amount of liquid in each of the element portions 34 and 38 is reduced. If only high performance is to be achieved, it is also conceivable to employ a liquid separation filter including one layer of an element portion having an increased thickness. However, in this case, an amount of liquid retained by the element portion increases.

On the other hand, in the liquid separation filter 20 according to the present embodiment, since a plurality of the element portions 34 and 38 are separated from each other, an amount of liquid that flows in is not entirely shared. That is, in the liquid separation filter 20 according to the present embodiment, since a part of liquid that flows in is accumulated between the first element portion 34 and the second element portion 38, a load on the element portions 34 and 38 can be reduced as compared with a case of including one layer of an element portion having an increased thickness. Then, holding of collected liquid is performed on the first element portion 34 side, and a holding amount of liquid on the second element portion 38 side can be reduced.

Further, in the liquid separation filter 20 according to the present embodiment, even if abnormality occurs in the first element portion 34, in a case where the second element portion 38 functions, liquid separation performance can be maintained (backup function).

Note that, in the present embodiment, the first element portion 34 and the second element portion 38 have different constituent fiber materials. The first element portion 34 having a large collection amount of liquid may be formed of, for example, glass wool, a demister, or the like for rough removal, and the second element portion 38 may be formed of, for example, a glass fiber, activated carbon, or the like as a filter for high efficiency collection. As described above, performance can be optimized by customization according to an arrangement place and application. However, a material for forming the first element portion 34 and a material for forming the second element portion 38 may be the same.

Further, in the liquid separation filter 20 according to the present embodiment, the opening portion G is provided between the first lower end holding portion 46 and the second lower end holding portion 42. For this reason, liquid that is collected and seeps out from the first element portion 34 can be suppressed from accumulating between the first lower end holding portion 46 and the second lower end holding portion 42. If the opening portion G is not provided and liquid is accumulated between the first lower end holding portion 46 and the second lower end holding portion 42, a lower portion of the first element portion 34 or a lower portion of the second element portion 38 may be immersed in liquid.

However, in the liquid separation filter 20 according to the present embodiment, since the opening portion G is provided between the first lower end holding portion 46 and the second lower end holding portion 42, it is possible to suppress liquid from accumulating between the first lower end holding portion 46 and the second lower end holding portion 42 and to suppress a lower portion of the second element portion 38 and the first element portion 34 from being immersed in liquid.

Further, since the liquid separation constituent 36 of the liquid separation filter 20 according to the present embodiment includes the liquid storage portion 58 including the discharge mechanism 58a, it is not necessary to provide a large-capacity liquid storage portion assuming that liquid continues to be accumulated, and it is possible to suppress increase in size. Further, it is also possible to suppress increase in weight of the liquid separation filter 20 (increase in weight of the liquid separation filter core 22) due to weight of liquid accumulated in the liquid storage portion 58.

Furthermore, in the liquid separation filter 20 according to the present embodiment, since the gap GD in the radial direction between the first element portion 34 and the second element portion 38 is 5 mm or more, it is preferable to suppress liquid seeping out to an outer surface of the first element portion 34 from re-scattering and adhering to the second element portion 38. Further, the gap GD is 100 mm or less, which is preferable to make size of the liquid separation filter core 22 to be compact.

### [Second embodiment]

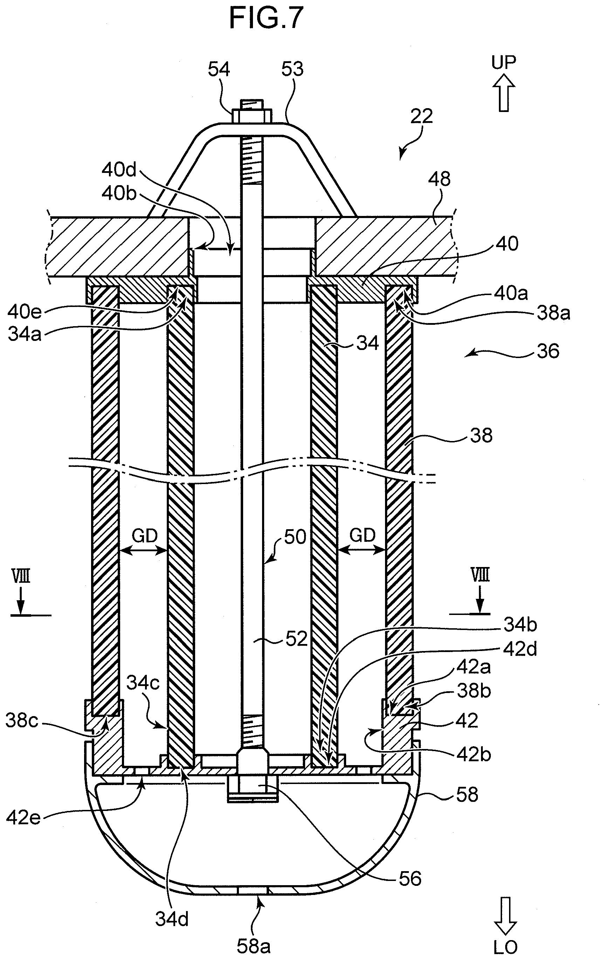

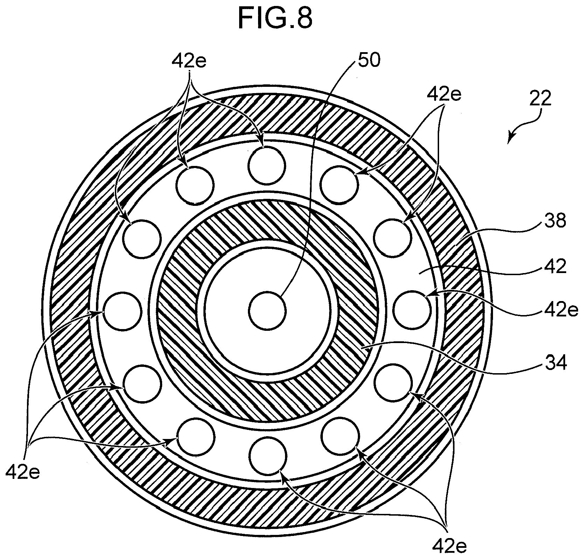

The liquid separation filter core 22 in a configuration of the liquid separation filter 20 according to a second embodiment of the present invention will be described with reference to Figs. 7 and 8. Note that, in Figs. 7 and 8, a portion having the same configuration as that of the first embodiment is denoted by the same reference numeral, and omitted from description below. Further, a matter not mentioned below is the same as that in the first embodiment.

As illustrated in Fig. 7, in the liquid separation filter core 22 according to the present embodiment, the holding portion 40 has a receiving recessed portion 40e into which the upper end portion 34a of the first element portion 34 is fitted, in addition to the receiving recessed portion 40a into which the upper end portion 38a of the second element portion 38 is fitted. Then, in the liquid separation filter core 22 according to the present embodiment, the first upper end holding portion 44 included in the liquid separation filter core 22 according to the first embodiment is omitted. That is, in the liquid separation filter core 22 according to the present embodiment, the holding portion 40 has the receiving recessed portion 40a and the receiving recessed portion 40e, and the gap GD is held in the radial direction between the first element portion 34 fitted in the receiving recessed portion 40e and the second element portion 38 fitted in the receiving recessed portion 40a. By the above, in the present embodiment, the holding portion 40 functions as a gap holding portion.

In the liquid separation filter core 22 according to the present embodiment, the second lower end holding portion 42 has a receiving recessed portion 42d into which the lower end portion 34b of the first element portion 34 is fitted, in addition to the receiving recessed portion 42a into which the lower end portion 38b of the second element portion 38 is fitted.

As illustrated in Fig. 7, the second lower end holding portion 42 is provided with the non-element portion 42b similarly to the second lower end holding portion 42 of the first embodiment. A function of the non-element portion 42b is the same as that of the first embodiment.

Furthermore, as illustrated in Figs. 7 and 8, the second lower end holding portion 42 has a plurality of opening portions 42e in a region between the receiving recessed portion 42a and the receiving recessed portion 42d in the radial direction. A plurality of the opening portions 42e are provided to be dispersed in a circumferential direction.

The liquid separation filter 20 including the liquid separation filter core 22 having the above configuration can obtain the same effect as that of the first embodiment.

Further, since the liquid separation filter core 22 according to the present embodiment does not have the first upper end holding portion 44 or the first lower end holding portion 46, weight of the liquid separation filter 20 can be reduced accordingly.

Note that, in the first embodiment, the liquid separation filter core 22 of the liquid separation filter 20 is configured as the first element portion 34 is covered with the liquid separation constituent 36. On the other hand, the liquid separation filter core 22 according to the present embodiment is not retrofitted with the liquid separation constituent 36, but is configured by a combination of the first element portion 34 and the liquid separation constituent 36 from the beginning.

### [Third embodiment]

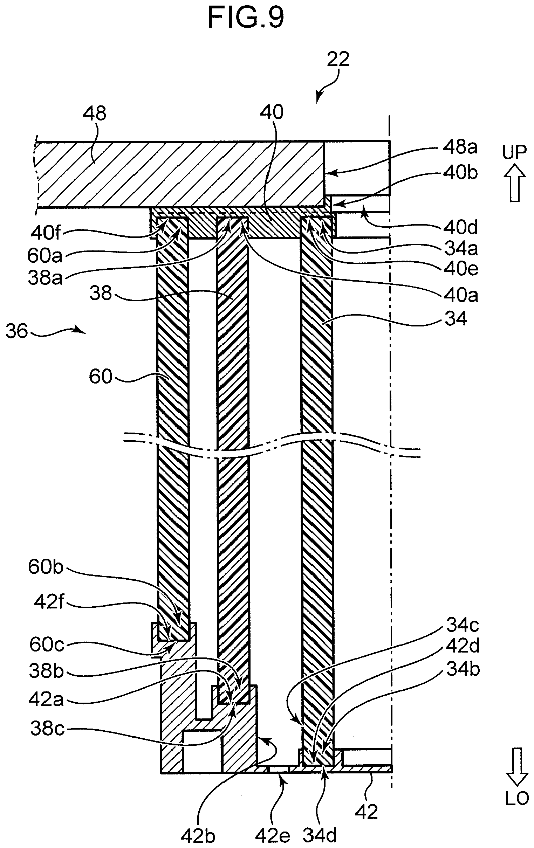

The liquid separation filter core 22 in a configuration of the liquid separation filter 20 according to a third embodiment of the present invention will be described with reference to Fig. 9. Note that, in Fig. 9, a portion of the same configuration as that of the first embodiment and the second embodiment is denoted by the same reference numeral, and is omitted from description below. Further, a matter not mentioned below is the same as that in the first embodiment and the second embodiment.

As illustrated in Fig. 9, the liquid separation filter core 22 according to the present embodiment includes a third element portion 60 in addition to the first element portion 34 and the second element portion 38. In other words, the liquid separation filter core 22 is configured as the first element portion 34 is covered with the liquid separation constituent 36 including the second element portion 38 and the third element portion 60.

Further, in the liquid separation filter core 22 according to the present embodiment, the holding portion 40 has a receiving recessed portion 40f in addition to the receiving recessed portion 40a and the receiving recessed portion 40e. An upper end portion 60a of the third element 60 is fitted into the receiving recessed portion 40f.

Further, in the liquid separation filter core 22 according to the present embodiment, the second lower end holding portion 42 has a receiving recessed portion 42f in addition to the receiving recessed portion 42a and the receiving recessed portion 42d. A lower end portion 60b of the third element 60 is fitted into the receiving recessed portion 42f.

As illustrated in Fig. 9, also in the second lower end holding portion 42, similarly to the first embodiment and the second embodiment, the non-element portion 42b is provided in a portion on the inner side in the radial direction below the receiving recessed portion 42a. A function of the non-element portion 42b is the same as that of the first embodiment and the second embodiment.

Furthermore, as illustrated in Fig. 9, in the second lower end holding portion 42, the receiving recessed portions 42a, 42d, and 42f are formed such that the lower end surface 38c of the second element portion 38 is positioned further on the upper side than the lower end surface 34d of the first element portion 34, and a lower end surface 60c of the third element portion 60 is positioned further on the upper side than the lower end surface 38c of the second element portion 38. As illustrated in Fig. 9, in the second lower end holding portion 42, the receiving recessed portions 42a and 42f are provided such that the lower end surface 60c of the third element portion 60 is positioned further on the upper side than the lower end surface 38c of the second element portion 38. By the above, an inner peripheral wall portion located below the receiving recessed portion 42f with respect to a lower end portion of the second element portion 38 functions as a second non-element portion that suppress adhesion of liquid re-scattered from a lower end portion of the second element portion 38 to the third element portion 60.

Note that the second lower end holding portion 42 also has a plurality of the opening portions 42e in a region between the receiving recessed portion 42a and the receiving recessed portion 42d in the radial direction. A plurality of the opening portions 42e are provided to be dispersed in the circumferential direction similarly to the second embodiment.

The liquid separation filter 20 including the liquid separation filter core 22 having the above configuration can obtain the same effect as that of the first embodiment and the second embodiment.

Further, since the liquid separation filter core 22 according to the present embodiment does not have the first upper end holding portion 44 or the first lower end holding portion 46, weight of the liquid separation filter 20 can be reduced accordingly.

Further, the liquid separation filter core 22 according to the present embodiment includes the third element portion 60 in addition to the first element portion 34 and the second element portion 38. For this reason, even if abnormality occurs in the first element portion 34 or the second element portion 38, liquid separation can be maintained in a case where the third element portion 60 functions. Therefore, the present embodiment has a higher backup function than the first embodiment and the second embodiment.

### [Fourth embodiment]

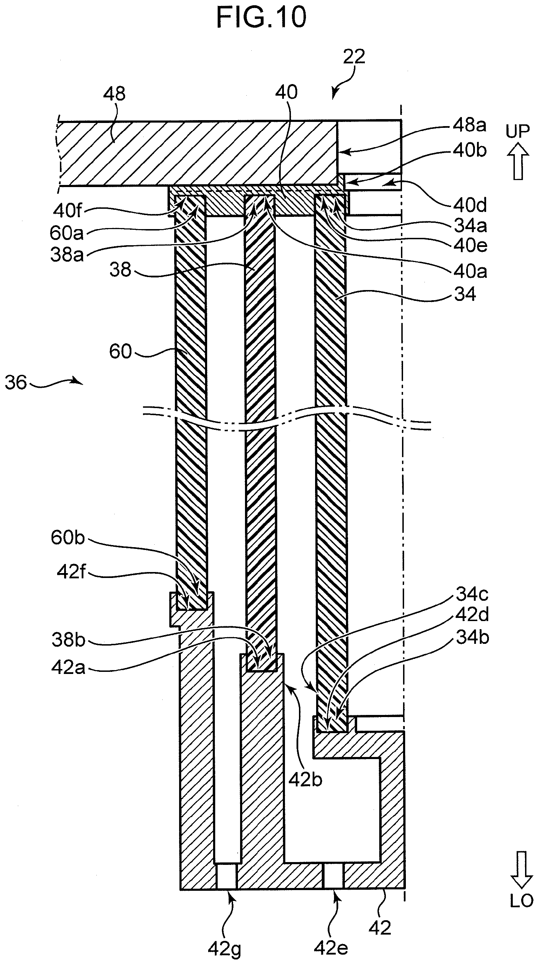

The liquid separation filter core 22 in a configuration of the liquid separation filter 20 according to a fourth embodiment of the present invention will be described with reference to Fig. 10. Note that, in Fig. 10, a portion of the same configuration as that of the first embodiment, the second embodiment, and the third embodiment is denoted by the same reference numeral, and is omitted from description below. Further, a matter not mentioned below is the same as that in the first embodiment, the second embodiment, and the third embodiment. Then, hereinafter, a difference from the third embodiment will be mainly described.

As illustrated in Fig. 10, the second lower end holding portion 42 is provided with a plurality of opening portions 42g penetrating downward at a groove bottom between the receiving recessed portion 42a into which the lower end portion 38b of the second element portion 38 is fitted and the receiving recessed portion 42f into which the lower end portion 60b of the third element portion 60 is fitted. Although not illustrated, a plurality of the opening portions 42g are formed to be dispersed in the circumferential direction.

The liquid separation filter 20 including the liquid separation filter core 22 having the above configuration can obtain the same effect as that of the first embodiment to the third embodiment.

Further, the liquid separation filter 20 including the liquid separation filter core 22 according to the present embodiment includes the third element portion 60 in addition to the first element portion 34 and the second element portion 38, and thus has a high backup function as in the third embodiment.

Further, in the liquid separation filter 20 according to the present embodiment, the second lower end holding portion 42 is provided with a plurality of the opening portions 42g in a portion between the receiving recessed portion 42a and the receiving recessed portion 42f in the radial direction. For this reason, in the liquid separation filter 20, it is possible to suppress liquid from accumulating in a groove portion between the receiving recessed portion 42a and the receiving recessed portion 42f and to suppress a lower portion of the third element portion 60 and the second element portion 38 from being immersed in liquid.

### [Fifth embodiment]

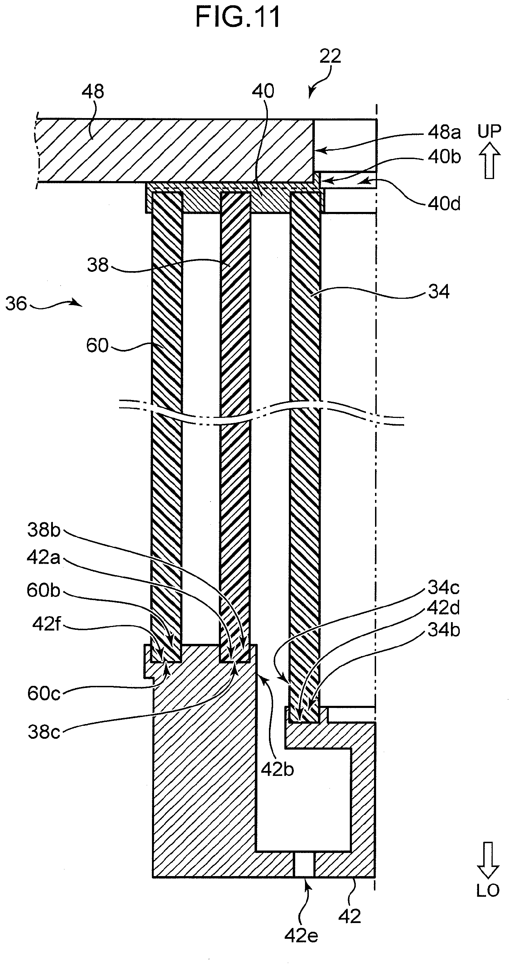

The liquid separation filter core 22 in a configuration of the liquid separation filter 20 according to a fifth embodiment of the present invention will be described with reference to Fig. 11. Note that, in Fig. 11, a portion of the same configuration as that of the first embodiment to the fourth embodiment is denoted by the same reference numeral, and is omitted from description below. Further, a matter not mentioned below is the same as that in the first embodiment to the fourth embodiment. Then, hereinafter, a difference from the third embodiment will be mainly described.

In the liquid separation filter core 22 according to the third embodiment, the receiving recessed portions 42a, 42d, and 42f of the second lower end holding portion 42 are formed such that the lower end surface 34d of the first element portion 34, the lower end surface 38c of the second element portion 38, and the lower end surface 60c of the third element portion 60 are positioned further on the upper side in this order.

On the other hand, as illustrated in Fig. 11, in the liquid separation filter core 22 according to the present embodiment, the receiving recessed portions 42d and 42f of the second lower end holding portion 42 are formed such that the lower end surface 38c of the second element portion 38 and the lower end surface 60c of the third element portion 60 are substantially at the same height position.

The liquid separation filter 20 including the liquid separation filter core 22 having the above configuration can obtain the same effect as that of the third embodiment.

Further, in the liquid separation filter core 22 according to the present embodiment, since the second element portion 38 and the third element portion 60 have substantially the same height, the second element portion 38 and the third element portion 60 can be a common member. Therefore, member management in manufacturing and maintenance is facilitated.

### [Sixth embodiment]

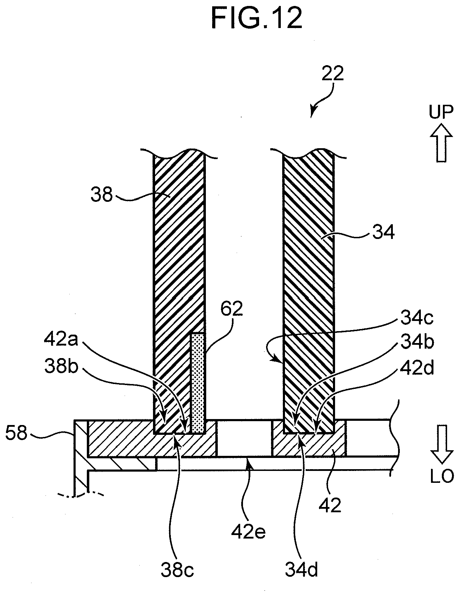

The liquid separation filter core 22 in a configuration of the liquid separation filter 20 according to a sixth embodiment of the present invention will be described with reference to Fig. 12. Note that, in Fig. 12, a portion having the same configuration as that of the second embodiment is denoted by the same reference numeral, and omitted from description below. Further, a matter not mentioned below is the same as that in the second embodiment.

In the liquid separation filter core 22 according to the second embodiment, the receiving recessed portions 42a and 42d of the second lower end holding portion 42 are provided such that the lower end surface 38c of the second element portion 38 is positioned further on the upper side than the lower end surface 34d of the first element portion 34. Then, in the liquid separation filter core 22 according to the second embodiment, the non-element portion 42b is provided in a portion on the inner side in the radial direction below the receiving recessed portion 42a in the second lower end holding portion 42.

On the other hand, as illustrated in Fig. 12, in the liquid separation filter core 22 according to the present embodiment, the second lower end holding portion 42 does not have the non-element portion 42b. In the liquid separation filter core 22 according to the present embodiment, the receiving recessed portions 42a and 42d of the second lower end holding portion 42 are provided such that the lower end surface 34d of the first element portion 34 and the lower end surface 38c of the second element portion 38 are at the same height position. Then, in the liquid separation filter core 22 according to the present embodiment, a non-element portion 62 having a cylindrical shape is provided as a member separate from the second lower end holding portion 42.

The non-element portion 62 includes a member (for example, a cylindrical metal material or resin material having no hole) that does not allow or suppress permeation of liquid. Then, a lower end portion of the non-element portion 62 is fitted into the receiving recessed portion 42a together with the lower end portion 38b of the second element portion 38. The non-element portion 62 faces the outer surface lower portion 34c of the first element portion 34 on the outer side in the radial direction in a state of being fitted in the receiving recessed portion 42a.

The liquid separation filter 20 including the liquid separation filter core 22 having the above configuration can obtain the same effect as that of the second embodiment.

Further, in the liquid separation filter core 22 according to the present embodiment, since the non-element portion 42b does not need to be provided in the second lower end holding portion 42 as in the second embodiment, it is possible to reduce weight and cost of the liquid separation filter 20 accordingly. Note that, in the present embodiment, a member having the same height as the first element portion 34 can be employed as the second element portion 38 of the liquid separation constituent 36. For this reason, it is not necessary to prepare members having different sizes for the first element portion 34 and the second element portion 38.

If the non-element portion 62 is arranged with a gap from the outer surface lower portion 34c of the first element portion 34, the non-element portion 62 may be arranged between the receiving recessed portion 42a and the receiving recessed portion 42d, that is, in the gap GD independently of the second element portion 38.

### [Seventh embodiment]

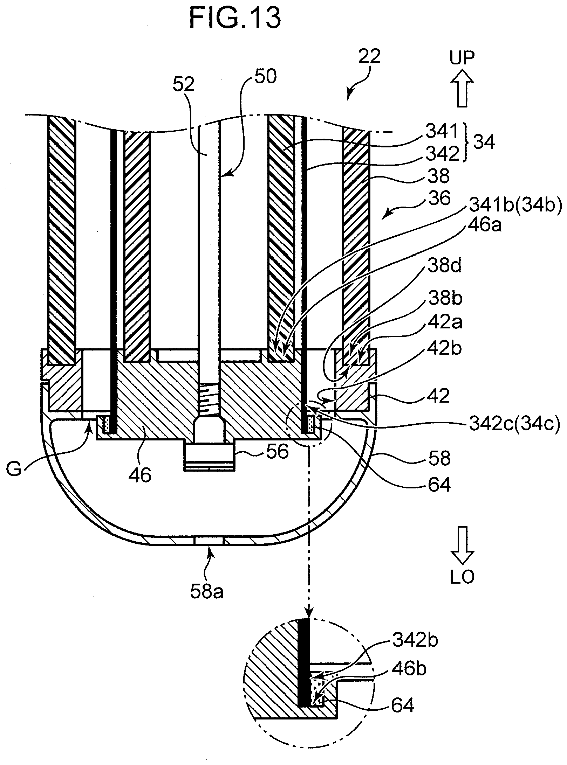

The liquid separation filter core 22 in a configuration of the liquid separation filter 20 according to a seventh embodiment of the present invention will be described with reference to Fig. 13. Note that, in Fig. 13, a portion having the same configuration as that of the first embodiment is denoted by the same reference numeral, and omitted from description below. Further, a matter not mentioned below is the same as that in the first embodiment.

In the liquid separation filter core 22 according to the first embodiment, the first element portion 34 formed of a fiber layer is employed. Then, in the liquid separation filter core 22 according to the first embodiment, the non-element portion 42b is disposed in a portion facing the outer surface lower portion 34c of the first element portion 34 on the outer side in the radial direction.

On the other hand, as illustrated in Fig. 13, in the liquid separation filter core 22 according to the present embodiment, the first element portion 34 is configured by combining an element body portion 341 formed of a fiber layer and a cylindrical metal portion 342 formed of a porous metal plate (for example, punching metal). The element body portion 341 and the cylindrical metal portion 342 both have a cylindrical shape. The cylindrical metal portion 342 is provided so as to extend further to the lower side than the element body portion 341.

A lower end portion 341b of the element body portion 341 is fitted into the receiving recessed portion 46a of the first lower end holding portion 46. A lower end portion 342b of the cylindrical metal portion 342 is inserted into an annular receiving groove portion 46b provided in the first lower end holding portion 46. Then, the cylindrical metal portion 342 is fixed to the first lower end holding portion 46 at the lower end portion 342b by an adhesive portion 64 formed to fill the receiving groove portion 46b.

Here, in the first element portion 34, an outer surface lower portion 342c of the cylindrical metal portion 342 corresponds to the outer surface lower portion 34c of the first element portion 34 in the first embodiment. Then, the second lower end holding portion 42 has the non-element portion 42b in a portion facing the outer side in the radial direction with respect to the outer surface lower portion 342c of the cylindrical metal portion 342.

In the liquid separation filter 20 including the liquid separation filter core 22 having the above configuration, gas passes through the element body portion 341 and the cylindrical metal portion 342 of the first element portion 34 so that liquid is separated and accumulated in a lower portion of the cylindrical metal portion 342 and the element body portion 341. Then, when an amount of liquid accumulated in a lower portion of the element body portion 341 exceeds a predetermined amount, the liquid seeps out to an outer peripheral surface in a lower portion. Liquid seeping from the element body portion 341 drips downward along the cylindrical metal portion 342 disposed in proximity and falls downward from the opening portion G. A part of liquid dripping down a lower portion of the cylindrical metal portion 342 may be re-scattered to the outer side in the radial direction by flow of gas blown between the outer surface lower portion 342c of the cylindrical metal portion 342 and the non-element portion 42b.

However, since the second lower end holding portion 42 is provided with the non-element portion 42b in a portion facing the outer side in the radial direction of the outer surface lower portion 342c of the cylindrical metal portion 342, even if liquid is re-scattered, the liquid adheres only to the non-element portion 42b and is suppressed from adhering to the second element portion 38. Therefore, the liquid separation filter 20 including the liquid separation filter core 22 according to the present embodiment and the compressor system 10 including the liquid separation filter 20 can obtain the same effect as that of the first embodiment.

Note that, in Fig. 13, a gap is formed between the element body portion 341 and the cylindrical metal portion 342, but the element body portion 341 and the cylindrical metal portion 342 may abut on each other.

### [Variation]

The liquid separation filter core 22 according to the first embodiment and the seventh embodiment has the opening portion G between the first lower end holding portion 46 and the second lower end holding portion 42, and the liquid separation filter core 22 according to the second embodiment to the sixth embodiment has a plurality of the opening portions 42e and 42g in the second lower end holding portion 42. However, in the present invention, the opening portions G, 42e, and 42g are not essential configurations, and can be omitted.

Further, in the first to seventh embodiments, the liquid separation constituent 36 includes the liquid storage portion 58. However, in the present invention, the liquid storage portion 58 does not need to be included. Further, even in a case where the liquid storage portion 58 is included, it is not essential to include the discharge mechanism 58a.

Further, in the first to seventh embodiments, the gap GD between the first element portion 34 and the second element portion 38 is in a range of 5 mm or more and 100 mm or less. However, in the present invention, the gap GD between the first element portion 34 and the second element portion 38 does not need to be in a range of 5 mm or more and 100 mm or less. The gap GD can be appropriately set according to a situation where liquid collected and accumulated in the first element portion 34 is re-scattered to the side of the second element portion 38.

Further, in the first embodiment, the existing first element portion 34 is covered with the liquid separation constituent 36 to form the liquid separation filter core 22 having the element portions 34 and 38 in double layers. Note that the present invention is not limited to this. For example, the liquid separation filter core 22 having the element portions 34 and 38 in double layers can be replaced with an existing liquid separation core (that is, a liquid separation core in a single layer), or the liquid separation filter 20 itself can be replaced with an existing liquid separation filter (that is, a liquid separation filter in a single layer). As a matter of course, in the compressor system 10, the liquid separation filter 20 may be utilized as a finished product from the beginning. The same applies to another embodiment.

### [Summary]

A liquid separation constituent according to an aspect of the present invention is a liquid separation constituent to be used by covering a first element portion having a fiber layer for separating liquid from gas discharged from a compressor, and includes a second element portion, a holding portion, and a non-element portion. The second element portion is a tubular portion having a fiber layer that is disposed on the outer side in the radial direction so as to surround the first element portion when the second element portion covers the first element portion and further separates liquid from gas separated by the first element portion. The holding portion is a portion that holds the second element portion such that a gap is formed between the first element portion and the second element portion in the radial direction. The non-element portion is a portion configured to suppress liquid seeping out from a lower portion of the first element portion from scattering to the second element portion.

The liquid separation constituent according to the above aspect covers the first element portion so that a liquid separation filter core is formed. For this reason, by covering an existing liquid separation filter core including only the first element portion with the liquid separation constituent according to the above aspect, it is possible to easily form a liquid separation filter core in which a plurality of element portions are provided in multiple layers. Therefore, in a case where the liquid separation constituent according to the above aspect is used, it is possible to reduce increase in cost as compared with a case where an existing liquid separation filter core is removed and a new liquid separation filter core is provided.

Further, since the liquid separation filter core formed by covering the first element portion with the liquid separation constituent according to the above aspect includes a plurality of element portions provided in multiple layers, it is possible to reduce size and cost of an entire compressor system while suppress decrease in a liquid collection effect as compared with a case where a plurality of liquid separation filters are arranged in multiple stages.

Further, in a case where the liquid separation constituent according to the above aspect covers the first element portion, a non-element portion is provided in a portion facing the outer side in the radial direction of an outer surface lower portion of the first element portion. For this reason, in a case where the liquid separation constituent according to the above aspect covers the first element portion, adhesion of liquid to the second element portion is suppress even if the liquid is re-scattered from an outer surface lower portion of the first element portion. That is, liquid collected by the first element portion is accumulated in a lower portion of the first element portion. The lower portion (hereinafter, "WET band portion") holds a large amount of liquid, and liquid easily seeps out to an outer surface and easily re-scatters. In a case where the liquid separation constituent according to the above aspect covers the first element portion, a non-element portion is disposed on the outer side in the radial direction of the WET band portion. By the above, in the liquid separation constituent, even if liquid that seeps out is re-scattered, adhesion of the liquid to the second element portion is suppress by the non-element portion. Further, as the non-element portion is disposed on the outer side in the radial direction of an outer surface lower portion of the first element portion, gas flow in the WET band portion is reduced, and re-scattering of liquid itself can be deactivated.

Further, in a case where the liquid separation constituent according to the above aspect covers the first element portion, liquid seeping out to an outer surface lower portion of the first element portion is suppress from adhering to the second element portion, so that liquid flowing into the second element portion is reduced. That is, when the liquid separation constituent according to the above aspect is employed, a liquid scattering amount and pressure loss in the second element portion are less likely to increase. When the entire liquid separation filter is viewed, high performance and long life can be achieved.

The liquid separation constituent according to the above aspect may have an opening portion immediately below the gap, and may further include a liquid storage portion configured to holding liquid flowing down through the opening portion.

Since the liquid separation constituent according to the above aspect has an opening portion immediately below the gap, it is possible to suppress liquid seeping out from the covered first element portion from accumulating between the first element portion and the second element portion.

The liquid separation constituent according to the above aspect may further include a discharge mechanism for discharging liquid in the liquid storage portion.

Since the liquid separation constituent according to the above aspect includes the liquid storage portion having the discharge mechanism, it is possible to suppress increase in size of the liquid separation filter including the liquid separation constituent as compared with a case where a large-capacity liquid storage portion assuming that liquid continues to be accumulated is provided. Further, in the liquid separation constituent according to the above aspect, increase in weight of the liquid separation constituent due to increase in an amount of liquid accumulated in the liquid storage portion is also suppressed.

In the liquid separation constituent according to the above aspect, the gap may have a width in the radial direction of 5 mm or more and 100 mm or less.

In a case where the liquid separation constituent according to the above aspect covers the first element portion, a gap between the first element portion and the second element portion is 5 mm or more. For this reason, even if liquid seeping out to an outer surface of the first element portion is re-scattered, the liquid separation constituent according to the above aspect is suitable for suppress adhesion of the liquid to the second element portion. Further, in a case where the liquid separation constituent according to the above aspect covers the first element portion, a gap between the first element portion and the second element portion is 100 mm or less, which is preferable in term of compactness.

A liquid separation filter according to an aspect of the present invention is a liquid separation filter for separating liquid from gas discharged from a compressor, and includes a housing container and a liquid separation core. The housing container has a gas inlet and a gas outlet. The liquid separation filter core is housed in the housing container. In the liquid separation filter according to the present aspect, the liquid separation filter core includes a first element portion, a second element portion, a gap forming portion, and a non-element portion. The first element portion is a portion having a tubular shape and having a fiber layer for first separating liquid from gas flowing in from the gas inlet. The second element portion is a portion that has a tubular shape, is disposed on the outer side in the radial direction so as to surround the first element portion, and includes a fiber layer for further separating liquid from gas separated in the first element portion. The gap forming portion is a portion that forms a gap between the first element portion and the second element portion by separating the first element portion and the second element portion in the radial direction. The non-element portion is a portion for suppress liquid seeping out from a lower portion of the first element portion from scattering to the second element portion.

In the liquid separation filter according to the above aspect, the non-element portion is provided in a portion facing the outer side in the radial direction of an outer surface lower portion of the first element portion. For this reason, in the liquid separation filter according to the above aspect, even if liquid is re-scattered from an outer surface lower portion of the first element portion, adhesion of the liquid to the second element portion is suppressed. That is, liquid collected by the first element portion is accumulated in a lower portion of the first element portion. The lower portion (hereinafter, "WET band portion") holds a large amount of liquid, and liquid easily seeps out to an outer surface and easily re-scatters. In the liquid separation filter according to the above aspect, since the non-element portion is disposed on the outer side in the radial direction of the WET band portion, even if liquid that seeps out is re-scattered, the non-element portion suppress adhesion of the liquid to the second element portion. Further, as the non-element portion is disposed on the outer side in the radial direction of an outer surface lower portion of the first element portion, gas flow in the WET band portion is reduced, and re-scattering of liquid itself can be deactivated.

Further, since the liquid separation filter according to the above aspect includes a plurality of element portions in which liquid separation filter cores are provided in multiple layers, the same collection effect as in a case where a plurality of independent liquid separation filters are installed in multiple stages in series can be obtained. Further, in the liquid separation filter according to the above aspect, reduction in cost and size can be achieved as compared with a case where a plurality of independent liquid separation filters are installed.

Further, in the liquid separation filter according to the above aspect, since the non-element portion suppress liquid seeping out to an outer surface lower portion of the first element portion from adhering to the second element portion, liquid flowing into the second element portion is reduced. That is, in the liquid separation filter according to the above aspect, a liquid scattering amount and pressure loss in the second element portion are less likely to increase. When the entire liquid separation filter is viewed, high performance and long life can be achieved.

In the liquid separation filter according to the above aspect, the liquid separation filter core may have an opening portion immediately below the gap, and may further include a liquid storage portion for holding liquid flowing down through the opening portion.

In the liquid separation filter according to the above aspect, since the liquid separation filter core has an opening portion immediately below the gap, it is possible to suppress liquid seeping out from the covered first element portion from accumulating between the first element portion and the second element portion.

In the liquid separation filter according to the above aspect, the liquid separation filter core may further include a discharge mechanism for discharging liquid in the liquid storage portion.

In the liquid separation filter according to the above aspect, since the liquid separation filter core includes the liquid storage portion having the discharge mechanism, it is possible to suppress increase in size as compared with a case where a large-capacity liquid storage portion assuming that liquid continues to be accumulated is provided. Further, in the liquid separation filter according to the above aspect, increase in weight of the liquid separation constituent due to increase in an amount of liquid accumulated in the liquid storage portion is also suppressed.

In the liquid separation filter according to the above aspect, the gap may have a width in the radial direction of 5 mm or more and 100 mm or less.

In the liquid separation filter according to the above aspect, since a gap between the first element portion and the second element portion is 5 mm or more, it is suitable for suppress adhesion of liquid seeping out to an outer surface of the first element portion to the second element portion even if the liquid is re-scattered,. Further, in the liquid separation filter according to the above aspect, a gap between the first element portion and the second element portion is 100 mm or less, which is preferable in term of compactness.

The compressor system according to an aspect of the present invention includes a compressor, a liquid recovery device, and a liquid separation filter. The liquid recovery device collects liquid from discharge gas discharged from the compressor. The liquid separation filter is a liquid separation filter that is provided on the downstream side of the liquid recovery device and configured to separate liquid from discharge gas, and the liquid separation filter according to the above aspect is applied.

Since the compressor system according to the above aspect includes the liquid separation filter according to the above aspect, the effect of the liquid separation filter can be obtained as it is.

As described above, in each of the above aspects, it is possible to achieve a long life while suppress performance deterioration while suppress increase in manufacturing cost and increase in size.

This application is based on Japanese Patent application No. 2022-199404 filed in Japan Patent Office on December 14, 2022, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.
A liquid separation constituent is used by covering a first element portion having a fiber layer for separating liquid from gas discharged from a compressor, and includes a second element portion, a holding portion, and a non-element portion. The second element portion is a tubular portion having a fiber layer that is disposed on the outer side in the radial direction so as to surround the first element portion when the second element portion covers the first element portion and further separates liquid from gas separated by the first element portion. The holding portion is a portion that holds the second element portion such that a gap is formed between the first element portion and the second element portion in the radial direction. The non-element portion is a portion configured to suppress liquid seeping out from a lower portion of the first element portion from scattering to the second element portion.

## Claims

1. A liquid separation constituent (36) to be used by covering a first element portion (34) having a fiber layer for separating liquid from gas discharged from a compressor (12), the liquid separation constituent comprising:
a second element portion (38) having a tubular shape, the second element portion being disposed on an outer side in a radial direction so as to surround the first element portion (34) when the second element portion (38) covers the first element portion (34), the second element portion(38) having a fiber layer for further separating liquid from gas separated by the first element portion(34);
a holding portion (40) that holds the second element portion (38) such that a gap (GD) is formed between the first element portion (34) and the second element portion (38) in the radial direction; and
a non-element portion(42b,62) configured to suppress scattering of liquid seeping out from a lower portion of the first element portion (34) to the second element portion (38).

2. The liquid separation constituent (36) according to claim 1, further comprising a liquid storage portion (58) having an opening portion (G) immediately below the gap (GD) and configured to holding liquid flowing down through the opening portion (G).

3. The liquid separation constituent (36) according to claim 2, further comprising a discharge mechanism (58a) for discharging liquid in the liquid storage portion (58).

4. The liquid separation constituent (36) according to claim 1, wherein a width in the radial direction of the gap (GD) is 5 mm or more and 100 mm or less.

5. A liquid separation filter (20) for separating liquid from gas discharged from a compressor (12), the liquid separation filter (20) comprising:
a housing container (24) having a gas inlet and a gas outlet; and
a liquid separation filter core (22) housed in the housing container (24), wherein
the liquid separation filter core (22) includes:
a first element portion (34) having a tubular shape and including a fiber layer for first separating liquid from gas flowing in from the gas inlet;
the liquid separation constituent (36) according to claim 1.

6. The liquid separation filter (20) according to claim 5, wherein the liquid separation filter core (22) further includes a liquid storage portion (58) having an opening portion (G) immediately below the gap (GD) and for holding liquid flowing down through the opening portion (G).

7. The liquid separation filter (20) according to claim 6, wherein
the liquid separation filter core (22) further includes a discharge mechanism (58a) for discharging liquid in the liquid storage portion (58).

8. The liquid separation filter (20) according to claim 5, wherein a width in the radial direction of the gap (GD) is 5 mm or more and 100 mm or less.

9. The liquid separation filter (20) according to claim 6, wherein a width in the radial direction of the gap (GD) is 5 mm or more and 100 mm or less.

10. The liquid separation filter (20) according to claim 7, wherein a width in the radial direction of the gap (GD) is 5 mm or more and 100 mm or less.

11. A compressor system (10) comprising:
a compressor (12);
a liquid recovery device (16) for collecting liquid from discharge gas discharged from the compressor (12); and
the liquid separation filter (20) according to any one of claims 5 to 10 that is provided on a downstream side of the liquid recovery device (16) and configured to separate liquid from discharge gas.
